# EUROPÄISCHE PATENTANMELDUNG

(11) **EP 4 474 987 A1**
(43) Veröffentlichungstag der Anmeldung: **11.12.2024**
(21) Anmeldenummer: 23177962.0
(22) Anmeldetag: 07.06.2023
(51) Int. Cl.: G06F 9/455, G06F 21/53, H04L 9/40

(54) **VERFAHREN UND SYSTEM ZUM AUSFÜHREN EINER CONTAINER-IMPLEMENTIERTEN ANWENDUNG MIT NETZWERKBESCHRÄNKUNGEN**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Verfahren und System zum Ausführen einer Containerimplementierte Anwendung mit Netzwerkbeschränkungen umfassend die Schritte:
- Empfangen (S1) von mindestens zwei Netzwerkrichtlinien (30, 31, 32, 33), die jeweils mindestens eine Regel in Bezug auf Netzwerkbeschränkungen zur Kommunikation der Anwendung enthalten, und die jeweils einer Hierarchieebene (41, 42, 43) innerhalb einer Netzwerkrichtlinien-Hierarchie zugeordnet sind,
- Konfigurieren (S2) der Netzwerkbeschränkungen für die Anwendung durch Abarbeiten der einzelnen Netzwerkrichtlinien (30, 31, 32, 33) in der Reihenfolge absteigender Hierarchieebenen (41, 42, 43) von einer ranghöheren (41, 42) zu einer rangniedrigeren Hierarchieebene (42, 43), wobei die Netzwerkbeschränkungen aus der ranghöheren Netzwerkrichtlinie (31, 32) lediglich durch die rangniedrigere Netzwerkrichtlinie (32, 33) eingeschränkt werden können, und
- Ausführen (S3) der Anwendung entsprechend den konfigurierten Netzwerkbeschränkungen auf einer Container-Laufzeitumgebung (12).

## Beschreibung

Die Erfindung betrifft ein Verfahren, ein System und ein Computer-Programmprodukt zum Ausführen einer Container-implementierte Anwendung mit Netzwerkbeschränkungen.

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardwareressourcen des darunterliegenden Systems zugewiesen bekommen und über einen eigenen Betriebssystemkern verfügen, eine ressourcenschonende Art der Virtualisierung dar und kapseln eine in einem Container betriebene Software-Anwendung vom darunterliegenden Gastrechner ab.

Um einen Container auf dem Gastrechner starten zu können, wird ein Containerimage benötigt, welches neben der Anwendungssoftware auch die für die Anwendungssoftware erforderlichen Binärprogramme und Bibliotheken enthält. Aus dem Containerimage wird mit Hilfe einer Deployment-Konfiguration, auch als Bereitstellungskonfiguration bezeichnet, auf dem Gastrechner ein Container, genauer eine Containerinstanz, erstellt und auf der Laufzeitumgebung des Gastrechners ausgeführt.

Eine orchestrierte Laufzeitumgebung umfasst einen Orchestrierer, bevorzugt ausgebildet durch eine Orchestrierungssoftware ausgeführt auf einem vom Gastrechner unterschiedlichen Computer, und mindestens einen Gastrechner, häufig aber eine Vielzahl von Gastrechnern, die dem Orchestrierer zugeordnet sind. Der Orchestrierer startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloud-basierte Container-as-a-Services-Umgebungen oder in einer Cloud betriebene virtuelle Instanzen als Knoten einer orchestrierten Laufzeitumgebung verwalten.

Containerisierte Anwendungen können in ihrer Netzwerkkommunikation beschränkt werden. Hierzu werden beispielsweise "Netzwerk Policies" in der Orchestrierungssoftware "Kubernetes" verwendet, die dafür sorgen, dass ein Benutzer Einschränkungen für die Containerinstanzen definieren kann. Es können Netzwerk Policies von unterschiedlichen Parteien erstellt und eingebracht werden, beispielsweise von einem Entwickler der Anwendung, von einem Betreiber der Anwendung oder einem Administrator der Gastrechner bzw. Laufzeitumgebungen, auf denen die Anwendung ausgeführt werden soll.

Netzwerk Policies werden häufig innerhalb eines Anwendungsbündels an die Container-Laufzeitumgebung übergeben. Das Anwendungsbündel enthält alle zur Durchführung der Anwendung auf dem Gastrechner benötigten Komponenten, wie beispielsweise das Containerimage, die Deployment-Konfiguration, Signaturen und dergleichen. Auf der Laufzeitumgebung eine Containerinstanz gemäß dem Anwendungsbündel gestartet. Insbesondere bei der Verwendung solcher Anwendungsbündel, kann es jedoch wünschenswert sein, dass die Netzwerkeinschränkungen entsprechend der Netzwerk Policy eingerichtet werden, jedoch durch einen übergelagerten Administrator explizit weiter eingeschränkt werden können. Dies sollte möglich sein, ohne dass die innerhalb des Bündels befindliche Netzwerk Policy angepasst werden muss.

Es ist somit eine Aufgabe der vorliegenden Erfindung, ein Verfahren zu schaffen, bei dem Netzwerk Policies weiter bzw. granularer beschränkt werden können, ohne die Beschränkungsdefinition in den unterschiedlichen Netzwerk Policies modifizieren zu müssen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Ausführen einer Container-implementierte Anwendung mit Netzwerkbeschränkungen umfassend die Schritte:
- Empfangen von mindestens zwei Netzwerkrichtlinien, die jeweils mindestens eine Regel in Bezug auf Netzwerkbeschränkungen zur Kommunikation der Anwendung enthalten, und die jeweils einer Hierarchieebene innerhalb einer Netzwerkrichtlinien-Hierarchie zugeordnet sind,
- Konfigurieren der Netzwerkbeschränkungen für die Anwendung durch Abarbeiten der einzelnen Netzwerkrichtlinien in der Reihenfolge absteigender Hierarchieebenen von einer ranghöheren zu einer rangniedrigeren Hierarchieebene, wobei die Netzwerkbeschränkungen aus der ranghöheren Netzwerkrichtlinie lediglich durch die rangniedrigere Netzwerkrichtlinie eingeschränkt werden können, und
- Ausführen der Anwendung entsprechend den konfigurierten Netzwerkbeschränkungen auf einer Container-Laufzeitumgebung.

Netzwerkbeschränkungen werden somit hierarchisch auf der Container-Laufzeitumgebungen definiert und durchgesetzt. Netzwerkbeschränkungen betreffen beispielsweise eingehende und/oder ausgehende Verbindungen, z.B. auf Netzwerk-Portbasis. Unterschiedliche Parteien können verschiedene Netzwerkrichtlinien definieren. Durch die Zuordnung einer Hierarchieebene zu jeder Netzwerk-richtlinie und der Abarbeitung der Netzwerkrichtlinien in Reihenfolge absteigender Hierarchieebene werden die Netzwerkrichtlinien kaskadiert in Netzwerkbeschränkungen umgesetzt. Durch die Einschränkung, dass die Netzwerkbeschränkungen aus der ranghöheren Netzwerkrichtlinie lediglich durch die rangniedrigere Netzwerkrichtlinie eingeschränkt werden können, werden Überlappungen bzw. Kollisionen der Netzwerkrichtlinien vermieden. Somit können verschiedene Netzwerkrichtlinien umgesetzt werden, ohne die einzelnen Netzwerkrichtlinie verändern zu müssen.

In einer vorteilhaften Ausführungsform wird die Netzwerkrichtlinien-Hierarchie durch eine Priorisierungsrichtlinie vorgegeben, die jeder Netzwerkrichtlinie abhängig von einem Auswahlkriterium eine Hierarchieebene zuordnet.

Somit kann jeder Netzwerkrichtlinie nach deren Erstellung die Hierarchieebenen zugeordnet werden. Die gleiche Netzwerkrichtlinie kann durch eine Priorisierungsrichtlinie für eine andere Anwendung flexibel einer anderen Hierarchiestufe zugeordnet werden.

In einer vorteilhaften Ausführungsform betriff das Auswahlkriterium die Anwendung selbst, eine oder einen Ausführungsort, auf der die Anwendung ausgeführt wird.

Somit kann eine Netzwerkrichtlinie, die für die Anwendung spezifisch ist, einer bestimmten Hierarchieebene zugeordnet werden. Eine Netzwerkrichtlinie, die auf einem bestimmten Gerätetyp oder einer Version der Laufwerkumgebung spezifisch sind, wird einer anderen Hierarchieebene zugewiesen. Die Hierarchieebene kann auch basierend auf einen bestimmten Ausführungsort, einen Organisatorischen Bereich oder ähnliches der Netzwerkrichtlinie zugeordnet werden.

In einer vorteilhaften Ausführungsform kennzeichnet das Auswahlkriterium einen Ersteller der Netzwerkrichtlinie.

Somit kann auch eine Hierarchieebene in Bezug auf eine Rolle des Erstellers einer Netzwerkrichtlinie zugeordnet werden.

In einer vorteilhaften Ausführungsform wird ein Widerspruch von Netzwerkbeschränkungen, die durch verschiedene Netzwerkrichtlinien innerhalb einer Hierarchieebene auftritt, innerhalb dieser Hierarchieebene abgestimmt.

Somit wird eine Kollision oder ein Widerspruch zwischen den Hierarchieebenen vermieden.

In einer vorteilhaften Ausführungsform wird die Priorisierungsrichtlinie auf einer Verwaltungseinheit für alle von dieser Verwaltungseinheit verwalteten Gastrechner, auf denen die Anwendung ausgeführt wird, erstellt.

Somit können die die Netzwerkbeschränkungen für alle Gastrechner bzw. für alle darauf angeordnete Container-Laufzeitumgebungen zentral und einheitlich konfiguriert werden.

In einer vorteilhaften Ausführungsform wird die Netzwerkrichtlinie von der Verwaltungseinheit abgelehnt, wenn sie nicht eindeutig einer der Hierarchieebenen zugeordnet ist.

Somit wird sichergestellt, dass alle für die Anwendung anzuwendenden Netzwerkrichtlinien in die Hierarchische Ordnung der Richtlinien eingegliedert und entsprechend der zugeordneten Hierarchieebene in Netzwerkbeschränkungen umgesetzt wird. Somit werden Kollisionen bzw. Widersprüche zwischen Netzwerkrichtlinien bzw. den daraus resultierenden Netzwerkbeschränkungen vermieden.

In einer vorteilhaften Ausführungsform wird für jede Hierarchieebene jeweils genau eine Verarbeitungstabelle aus den Netzwerkrichtlinien dieser Hierarchieebene erstellt und die Verarbeitungstabellen werden entsprechend der absteigenden Rangfolge der Hierarcheebenen hintereinander ausgeführt.

Die Netzwerkbeschränkungen sind durch die ausgeführten Verarbeitungstabellen konfiguriert und somit realisiert. Somit werden Kollisionen bzw. Widersprüche innerhalb einer Hierarchieebene vermieden bzw. beim Erstellen der Verarbeitungstabelle erkannt und aufgelöst. Durch die vorgegebene Reichenfolge der Abarbeitung der Netzwerkrichtlinien und der Vorgabe, dass die Netzwerkbeschränkungen aus der ranghöheren Netzwerkrichtlinie lediglich durch die rangniedrigere Netzwerkrichtlinie eingeschränkt werden können, werden Kollisionen zwischen Netzwerkrichtlinien bzw. den daraus resultierenden Netzwerkbeschränkungen vermieden.

In einer vorteilhaften Ausführungsform wird ein Zugriff auf die Verarbeitungstabelle für einen oder mehrere Zugriffsberechtigten durch die Verwaltungseinheit verwaltet und überprüft.

Somit ist sichergestellt, dass die Verwaltungseinheit zentral die Zugriffsberechtigung überwacht und damit auch den Zugriff auf die Verarbeitungstabelle durchsetzen bzw. verhindern kann.

In einer vorteilhaften Ausführungsform wird die Zugriffsberechtigung auf die Verarbeitungstabelle einer bestimmten Hierarchieebene abhängig von einer Zugangsberechtigung eines Benutzers zur Verwaltungseinheit erteilt.

Dies verringert den Administrationsaufwand für die Zugriffsrichtlinie. Des Weiteren kann aus mit der Zugriffsberechtigung des Benutzers eine Hierarchieebene, die einer durch den Benutzer eingebrachten Netzwerkrichtlinie zugeordnet wird, abgeleitet werden.

In einer vorteilhaften Ausführungsform werden beim Empfang jeder der Netzwerkrichtlinien diejenigen Containerinstanzen der Anwendungen ermittelt, auf die die Netzwerkrichtlinie anzuwenden sind.

Somit können Netzwerkrichtlinien, die mehr als eine Anwendung betreffen, beispielsweise Gerätetyp- oder Standort-abhängig sind, effizient für alle betroffenen Containerinstanzen zentral in entsprechende Netzwerkbeschränkungen umgesetzt werden.

In einer vorteilhaften Ausführungsform wird bei einer Änderung der Priorisierungsrichtlinie während der Durchführung der Anwendung auf einer Container-Laufzeitumgebung, die Abfolge der jeweiligen Verarbeitungstabellen in die Reihenfolge entsprechend der geänderten Priorisierungsrichtlinie gebracht und konfiguriert.

Somit kann beispielsweise bei einer Änderung der Priorisierung einer Hierarchieebene die Netzwerkbeschränkungen mit geringem Konfigurationsaufwand geändert werden.

In einer vorteilhaften Ausführungsform werden die konfigurierten Netzwerkbeschränkungen durch ein Richtlinien-Umsetzungsmodul durchgesetzt, das auf der Containerlaufzeitumgebung des Gastrechners oder innerhalb der Containerinstanz angeordnet ist.

Ist die Richtlinien-Umsetzungsmodul auf der Containerlaufzeitumgebung des Gastrechners implementiert, werden die Netzwerkbeschränkungen zentral und somit effizient für alle Containerinstanzen auf der Laufzeitumgebung gemeinsam konfiguriert. Ist die Richtlinien-Umsetzungsmodul innerhalb der Containerinstanz angeordnet, können Netzwerkbeschränkungen lokal für diese Containerinstanz und ohne Beeinflussung anderer Containerinstanzen umgesetzt werden.

Gemäß einem zweiten Aspekt betrifft die Erfindung ein System zum Ausführen einer Container-implementierte Anwendung mit Netzwerkbeschränkungen umfassend:
- eine Verwaltungseinheit, die derart ausgebildet ist, mindestens zwei Netzwerkrichtlinien zu empfangen, die jeweils mindestens eine Regel in Bezug auf Netzwerkbeschränkungen zur Kommunikation der Anwendung enthalten, und die jeweils einer Hierarchieebene einer Netzwerkrichtlinien-Hierarchie zugeordnet sind,
- eine Richtlinien-Umsetzungsmodul, das derart ausgebildet ist, die Netzwerkbeschränkungen für die Anwendung durch Abarbeiten der einzelnen Netzwerkrichtlinien in der Reihenfolge absteigender Hierarchieebenen zu konfigurieren, wobei Netzwerkbeschränkungen einer ranghöheren Netzwerkrichtlinie lediglich durch die rangniedrigere Netzwerkrichtlinie eingeschränkt werden können, und
- eine Container-Laufzeitumgebung, die derart ausgebildet ist, die Anwendung entsprechend den konfigurierten Netzwerkbeschränkungen ausführen.

Durch das System können Netzwerkrichtlinien, die von unterschiedlichen Entitäten oder in unterschiedlichen Prozessen erzeugt wurden, innerhalb des Systems verfeinert werden, ohne die einzelnen Netzwerkrichtlinien ändern und/oder anpassen zu müssen.

Gemäß einem dritten Aspekt betrifft die Erfindung ein Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Sofern es in der nachfolgenden Beschreibung nicht anders angegeben ist, beziehen sich die Begriffe "empfangen", "konfigurieren", "ausführen", "ablehnen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Das System und darin optional enthaltene Komponenten, wie beispielsweise der Gastrechner bzw. die auf dem Gastrechner implementierte Container-Laufzeitumgebung, die Richtlinien-Umsetzungsmodul, die Richtlinien-Umsetzungsmodul, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine Ausführungsbeispiel des erfindungsgemäßen Verfahrens als Ablaufdiagramm;
- Fig. 2: ein Ausführungsbeispiel des erfindungsgemäßen Systems in Blockdarstellung;
- Fig. 3: eine Ausführungsbeispiel einer Abarbeitungskette von Netzwerkrichtlinien unterschiedlicher Hierarchieebenen in schematischer Darstellung; und
- Fig. 4: ein Ausführungsbeispiel eines erfindungsgemäßen Ablaufs beim Empfangen einer neuen Netzwerkrichtlinie als Ablaufdiagramm.

Einander entsprechende Teile sind in allen Figuren mit den gleichen Bezugszeichen versehen.

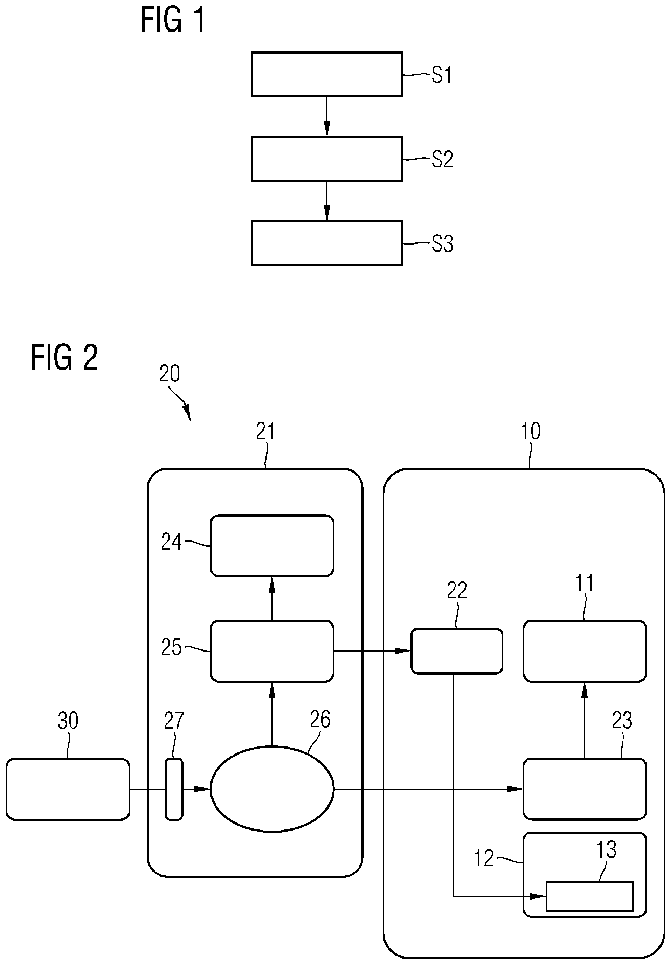

Containerisierte Anwendungen, synonym auch als Anwendung oder Applikation bezeichnet, können in ihrer Netzwerkkommunikation beschränkt werden. Hierzu werden Netzwerkrichtlinien verwendet, die dafür sorgen, dass ein Benutzer Einschränkungen für die Kommunikation der Containerinstanzen untereinander oder mit anderen Komponenten eines Kommunikationsnetzwerks definieren kann. Da solche Netzwerkrichtlinien von unterschiedlichen Entitäten erstellt und zu unterschiedlichen Zeiten innerhalb des Ausführungsprozesses der Anwendung erzeugt werden, wird eine Abarbeitung der verschiedenen Netzwerkrichtlinien entsprechend dem in Fig. 1 dargestellten Ausführungsbeispiel des erfindungsgemäßen Verfahrens vorgeschlagen.

Dem Verfahren liegt der Gedanke zu Grunde, dass Netzwerkbeschränkungen hierarchisch auf einer Container-Laufzeitumgebung, die auf einem Gastrechner eingerichtet ist, definiert und durchgesetzt werden.

In einem ersten Schritt S1 werden mindestens zwei Netzwerkrichtlinien, die jeweils mindestens eine Regel in Bezug auf Netzwerkbeschränkungen zur Kommunikation der Anwendung enthalten empfangen, beispielsweise in einer Verwaltungseinheit. Jede dieser Netzwerkrichtlinien sind jeweils einer Hierarchieebene innerhalb einer Netzwerkrichtlinien-Hierarchie zugeordnet. Anschließend Netzwerkbeschränkungen für die Anwendung konfiguriert, indem die einzelnen Netzwerkrichtlinien in der Reihenfolge absteigender Hierarchieebenen von einer ranghöheren zu einer rangniedrigeren Hierarchieebene abgearbeitet werden, siehe S2. Dabei können die Netzwerkbeschränkungen aus der ranghöheren Netzwerkrichtlinie lediglich durch die rangniedrigere Netzwerkrichtlinie eingeschränkt werden. Die Anwendung wird dann entsprechend den konfigurierten Netzwerkbeschränkungen auf einer Container-Laufzeitumgebung ausgeführt, siehe S3.

Hierdurch kann beispielsweise ein Anwendungs-Entwickler in einer ersten Netzwerkrichtlinie Anwendungs-spezifische Beschränkungen definieren. Diese werden dann z.B. von einem Geräteadministrator in einer nachgelagerten Netzwerkrichtlinie weiter verfeinert, ohne dass diese in Überlappung mit den ersten Anwendungs-spezifischen Netzwerkrichtlinien kommen. Anschließend kann durch das Verfahren in einem dritten Schritt, beispielsweise von einer lokalen IT-Security-Behörde nochmals ein weiteres Regelwerk definiert werden. Die Netzwerkrichtlinien werden über eine Benutzerschnittstelle dem Verfahren bzw. einem System, das die Verfahrensschritte ausführt, zugänglich gemacht.

Die Netzwerkrichtlinien-Hierarchie wird durch eine Priorisierungsrichtlinie vorgegeben, die jeder Netzwerkrichtlinie abhängig von einem Auswahlkriterium eine Hierarchieebene zuordnet. Auswahlkriterien sind beispielsweise dadurch gegeben, dass die Netzwerkrichtlinie die Anwendung selbst betrifft, oder dass die Netzwerkrichtlinie eine Ausführungseinheit, beispielsweise einen bestimmten Gastrechner oder einen bestimmten Gerätetyp betrifft, auf der die Anwendung ausgeführt wird. Ein weiteres Auswahlkriterium ist dadurch gegeben, dass die Netzwerkrichtlinie einen Ausführungsort, an dem die Anwendung ausgeführt wird, betrifft. Der Ausführungsort kann als räumlicher Ausführungsort definiert sein, beispielsweise einen geographischen Standort des Gastrechners und damit der Container-Laufzeitumgebung betreffen. Der Ausführungsort kann auch als organisatorischer Ausführungsort definiert sein, der beispielsweise eine bestimmte Domäne oder ein bestimmtes Subsystem in einem strukturierten Netz aus Gastrechnern betreffen. In eine Ausführungsvariante ist das Auswahlkriterium durch einen Ersteller der Netzwerkrichtlinie gegeben.

Das Auswahlkriterium, dass es sich um ein Anwendungsspezifische oder Ausführungseinheit-spezifische oder Ausführungsort-spezifische Netzwerkrichtlinie handelt, kann beispielsweise durch einen der Netzwerkrichtlinie zugeordneten Kenner identifiziert werden. Der Ersteller wird beispielsweise durch eine Zugriffsberechtigung für die Eingabe der Netzwerkrichtlinie identifiziert und ein entsprechender Kenner wird der Netzwerkrichtlinie zugeordnet.

Die Priorisierungsrichtlinie wird auf einer Verwaltungseinheit für alle von dieser Verwaltungseinheit verwalteten Gastrechner, auf denen die Anwendung ausgeführt, erstellt.

Fig. 2 zeigt beispielhaft ein System 20, das derart konfiguriert ist, Netzwerkbeschränkungen für eine Container-implementierte Anwendung basierend auf einer Netzwerkrichtlinien-Hierarchie auf einer Container-Laufzeitumgebung 23 eines Gastrechners 10 zu konfigurieren und die Anwendung innerhalb eine Containerinstanz 11 mit den implementierten Netzwerkbeschränkungen auszuführen.

Das System 20 umfasst eine Verwaltungseinheit 21, die derart ausgebildet ist, mindestens zwei Netzwerkrichtlinien zu empfangen, die jeweils mindestens eine Regel in Bezug auf Netzwerkbeschränkungen zur Kommunikation der Anwendung enthalten, und die jeweils einer Hierarchieebene einer Netzwerkrichtlinien-Hierarchie zugeordnet sind. Die Verwaltungseinheit 21 umfasst beispielsweise ein Orchestrierungsmodul 26, das Containerinstanzen auf dem einen Gastrechner 10 oder mehreren dem Orchestrierungsmodul 26 zugeordneten Gastrechnern verwalten, startet und beendet. Die Verwaltungseinheit 21 umfasst des Weiteren einen Richtlinientreibermodul 25, der eine Priorisierungsrichtlinie 24 verwaltet. Die Verwaltungseinheit 21 umfasst eine Nutzerschnittstelle 27, die derart konfiguriert ist Netzwerkrichtlinien 30 zu empfangen.

Das System 20 umfasst des Weiteren eine Richtlinien-Umsetzungsmodul 22, die derart ausgebildet ist, die Netzwerkbeschränkungen durch Abarbeiten der einzelnen Netzwerkrichtlinien in der Reihenfolge absteigender Hierarchieebenen zu konfigurieren. Das Richtlinien-Umsetzungsmodul 22 ist bevorzugt innerhalb des Gastrechners 10, auf dem die Anwendung ausgeführt wird, angeordnet. Das Richtlinien-Umsetzungsmodul 22 ist derart ausgebildet, die Netzwerkrichtlinien 30 in eine Form zu überführen, beispielsweise in Verarbeitungstabellen, sodass die aus den Netzwerkrichtlinien resultierenden Netzwerkbeschränkungen im Gastrechner 10 umgesetzt werden können. Die Netzwerkrichtlinien 30 werden in einer Richtliniendurchsetzungseinheit 13 durchgesetzt. Diese Richtliniendurchsetzungseinheit 13 ist beispielsweise mittels Netzwerk-Namespaces der Containerinstanz 11, innerhalb des Gastrechners 11 beispielsweise in Form einer Firewall, die lokal im Kernel 12 mit Hilfe eine Linux-Firewall-Lösung wie beispielsweise iptables / netfilter / Berkeley Packet Filter implementiert ist, oder als Hilfs-Container auf einer Applikationsebene der Anwendung ausgebildet sein.

In Fig.2 greift das Richtlinien-Umsetzungsmodul 22 beispielsweise auf einen Betriebssystemkern, im Weiteren kurz als Kernel 12 bezeichnet, zu und konfiguriert Ressourcen des Gastrechners 10 für die Containerinstanz 11 entsprechend den Netzwerkbeschränkungen. Im Gastrechner wird somit beispielsweise eine Firewall, die lokal im Kernel 12 ausgebildet ist, entsprechend den Netzwerkbeschränkungen konfiguriert. Die Anwendung wird anschließen in der Containerinstanz 11 auf der entsprechend konfigurierten Container-Laufzeitumgebung 23 ausführt.

Die Priorisierungsrichtlinie 24 gibt eine Zuordnung zwischen einem Kriterium einer Netzwerkrichtlinie und einer Hierarchieebene vor. Die einzelnen Netzwerkrichtlinien werden mit Hilfe der Priorisierungsrichtlinie 24 einer Hierarchieebene zugeordnet und anschließend in der Reihenfolge absteigender Hierarchieebenen von einer ranghöheren Hierarchieebene zu einer rangniedrigeren Hierarchieebene abgearbeitet, wobei die Netzwerkbeschränkungen aus der ranghöheren Netzwerkrichtlinie lediglich durch die rangniedrigere Netzwerkrichtlinie eingeschränkt werden können. Beispielsweise wird definiert, dass zunächst die Anwendungs-spezifischen Netzwerkrichtlinien angewendet werden, dann Netzwerkrichtlinien eines Gerätebetreibers des Gastrechners 11 und abschließend die Netzwerkrichtlinien einer dritten Entität, beispielsweise eines lokalen Security-Administrators.

Kann eine in der Verwaltungseinheit 21 empfangene Netzwerkrichtlinie 33 nicht eindeutig einer Hierarchieebene zugeordnet werden kann, wird diese Netzwerkrichtlinie von der Verwaltungseinheit 21 abgelehnt. Dies wird dadurch sichergestellt, dass die Priorisierungsrichtlinie 24 ausschließlich vom hierarchischen Richtlinientreibermodul 25 verwaltet wird. Beispielsweise können bei Verwendung einer Orchestrierungssoftware "Kubernetes" in der Verwaltungseinheit 21 Änderungsoperationen auf der Priorisierungsrichtlinie 24 mit Hilfe von Kundenressource Definitionen, auch Custom Ressource Definitions bezeichnet, durchgeführt werden. Somit können zwei Verarbeitungstabellen nicht die gleiche Verarbeitungspriorität zugewiesen bekommen.

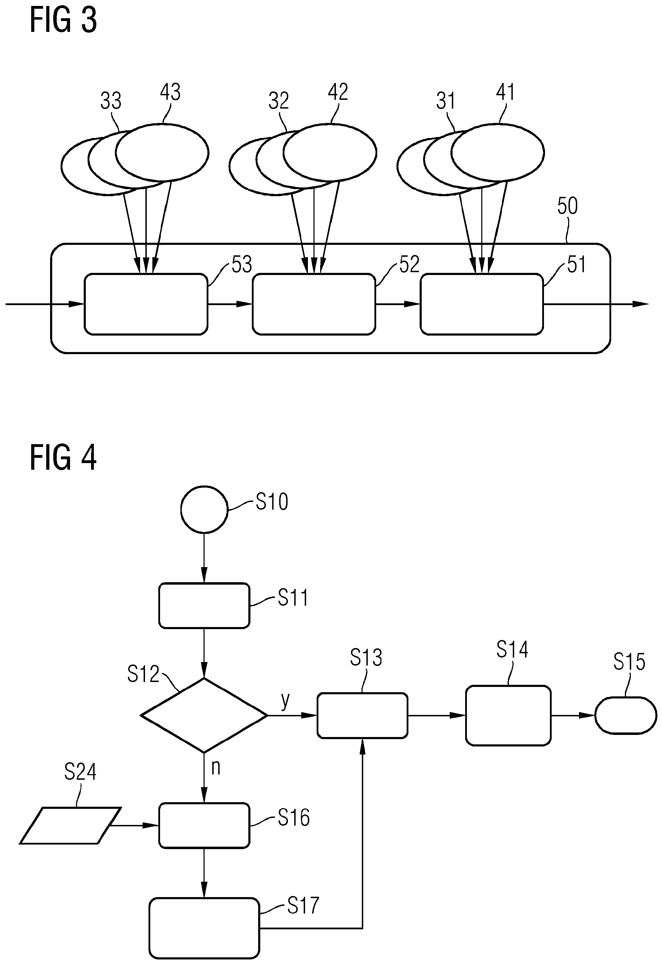

In Fig. 3 ist eine Abarbeitungskette 50 von Netzwerkrichtlinien 31, 32, 33 die unterschiedlichen Hierarchieebenen 41, 42, 43 zugeordnet sind dargestellt. Jeder Hierarchieebene 41, 42, 43 ist eine eindeutige Priorität, d.h. Reihenfolge der Abarbeitung, zugewiesen. Für jede der Hierarchieebenen 41, 42, 43 wird jeweils genau eine Verarbeitungstabelle 51, 52, 53 erstellt. So wird beispielsweise aus den Netzwerkrichtlinien 31 der Hierarchieebene 41 die Verarbeitungstabelle 51 erstellt. Die Verarbeitungstabellen 51, 52, 53 werden entsprechend der absteigenden Rangfolge der Hierarcheebenen 41, 42, 43 hintereinander ausgeführt. Ein Widerspruch von Netzwerkbeschränkungen, der durch verschiedene Netzwerkrichtlinien innerhalb einer Hierarchieebene auftritt, wird innerhalb dieser Hierarchieebene gelöst.

Beispielsweise werden Anwendungs-spezifische Netzwerkrichtlinien, die der höchsten Hierarchieebene 41 zugeordnet sind, in die Verarbeitungstabelle 51 umgesetzt und zuerst ausgeführt. Netzwerkrichtlinien eines Gerätebetreibers des Gastrechners 11, die der nächsten Rang-niedrigeren Hierarchieebene 42 zugeordnet sind werden in die Verarbeitungstabelle 52 überführt und nach der Verarbeitungstabelle 51 umgesetzt. Abschließend werden die Netzwerkrichtlinien der dritten Entität, die der absteigend nachfolgenden Hierarchieebene 43 zugeordnet sind, werden in die Verarbeitungstabelle 53 überführt und als letztes vom Richtlinienumsetzungsmodul 22 umgesetzt.

Ein Zugriffsberechtigung für einen Benutzer zum Eingeben einer Netzwerkrichtlinie und/oder zum Zugriff auf die Verarbeitungstabellen 51, 52, 53 wird durch die Verwaltungseinheit 21 verwaltet und überprüft. Um beispielsweise unterschiedlichen Benutzern für die jeweiligen hierarchischen Verarbeitungstabellen 51, 52, 53 Zugriffsberechtigungen zu erteilen, wird eine entsprechende Zuordnung von Benutzer und deren Berechtigungen durch die Verwaltungseinheit 21 durchgesetzt. Dabei kann auch mehreren Benutzern eine Zugriffsberechtigung zu einer einzigen Verarbeitungstabelle erteilt werden. Einem Benutzer können Zugriffsberechtigungen zu mehreren der hierarchischen Verarbeitungstabellen erteilt werden.

Um einem Benutzer die Zugriffsberechtigung für die jeweilige Verarbeitungstabelle einer der Hierarchieebenen eindeutig zuzuordnen, wird die Zugriffsberechtigung auf die Hierarchieebene implizit über die Berechtigung des Benutzers auf die Verwaltungseinheit 21 ermittelt. Dem Benutzer wird eine Zugriffsberechtigung auf die Hierarchieebene abhängig von der Berechtigung, die der Benutzer zum Zugang auf die Verwaltungseinheit 21 hat, zugewiesen. Verfügt der Benutzer der Verwaltungseinheit 21 über mehrere Berechtigungen, beispielsweise als Anwendungsbetreuer mit entsprechender Zugriffsberechtigung auf eine erste Hierarchieebene oder als Geräte-Administrator mit Zugriffsberechtigung auf eine zweite Hierarchieebene, ist eine Eingabe der gewünschten Hierarchieebene des Benutzers bei einem Zugriff durchzuführen.

Ein Ersteller, der die Netzwerkrichtlinie erstellt, muss hierbei nicht identisch mit dem Benutzer sein, der die Netzwerkrichtlinie auf die Verwaltungseinheit 21 einspielt.

Die Unterteilung der Netzwerkrichtlinien 31, 32, 33 in mehrere Verarbeitungstabellen 51, 52, 53 für die unterschiedliche Hierarchieebenen 41, 42, 43 hat den Vorteil, dass unterschiedliche Benutzer Beschränkungen mit einer bestimmten Priorität vorgeben können und diese in unterschiedlichen Tabellen durchgesetzt wird. Ein Benutzer, der nur eine Zugriffsberechtigung für eine Verarbeitungstabelle einer ersten Hierarchieebene hat, kann somit nicht Netzwerkrichtlinien der zweiten Hierarchieebene bearbeiten. Außerdem entsteht durch die Aufspaltung der unterschiedlichen Hierarchieebenen in Verarbeitungstabellen bei der eigentlichen Orchestrierung des Regelwerkes innerhalb einer Hierarchieebene eine geringere Komplexität bei der Ableitung von Beschränkungsregeln, beispielsweise iptables-Regeln, sowie deren Abfolge.

Anhand von Fig.4 wird der Ablauf des Verfahrens beim Einspielen einer neuen Netzwerkrichtlinie in Bezug auf das in Fig.2 dargestellte System 20 beschrieben.

Wird eine durch einen Benutzer eingespielte Netzwerkrichtlinie in der Verwaltungseinheit 21 empfangen, siehe S10, identifiziert die Verwaltungseinheit 21 zunächst die zu beschränkenden Containerinstanzen durch das hierarchische Richtlinientreibermodul 25, siehe S11. Dazu erhält das Richtlinientreibermodul 25 vom Orchestrierungsmodul 26 eine aktuelle Container-Laufzeitkonfiguration aller vom Orchestrierungsmodul 26 verwalteten Gastrechner. Alternativ dazu fragt das Richtlinientreibermodul 25 vom Orchestrierungsmodul 26 die aktuelle Container-Laufzeitkonfiguration jedes Gastrechners dediziert ab. Da auf Container-Laufzeitumgebungen IP-Adressen dynamisch beim Start neuer Containerinstanzen zugewiesen werden, werden Netzwerkrichtlinien üblicherweise Label-basiert definiert und diese Netzwerkrichtlinien dann auf einzelne Containerinstanzen oder Gruppen von Containerinstanzen übersetzt.

Für die einzuspielende Netzwerkrichtlinie wird im nächsten Schritt S12 überprüft, ob innerhalb Richtliniendurchsetzungspunktes, der für die identifizierten Containerinstanzen zuständig ist, die entsprechenden Verarbeitungstabellen vorhanden sind. Ist dies der Fall, werden die Netzwerkrichtlinien so umgesetzt, dass diese vom Richtliniendurchsetzungspunkt interpretiert werden können. Beispielsweise werden bei der Verwendung von "iptables" oder "netfilter" hierzu entsprechende iptables-Regeln definiert, siehe S13 und anschließend durch einen Orchestierungsvorgang in die jeweilige Verarbeitungstabelle eingefügt, siehe S14. Damit ist das Einbringen einer neuen Netzwerkrichtlinie beendet, siehe S15.

Falls keine Verarbeitungstabelle für die gewünschte Hierarchieebene vorhanden ist, wird mit Hilfe der Priorisierungsrichtlinie 24 die Hierarchieebene der eingespielten Netzwerkrichtlinie ermittelt, siehe S16. In einem Zusammenspiel von Richtlinientreibermodul 22 und dem Richtlinien-Umsetzungsmodul 25 wird die Verarbeitungskette 50 durchgeführt und innerhalb dieser eine neue Verarbeitungstabelle an der richtigen Stelle eingefügt oder eine vorhandene Verarbeitungstabelle ergänzt, siehe S17.

Anschließend wird die eingespielte Netzwerkrichtlinie in iptables-Regeln übersetzt, siehe S13. Anschließend werden die neuen iptables-Regeln in die Verarbeitungstabellen der einzelnen identifizierten Containerinstanzen, siehe S14. Dazu kann einer Reorganisation der Verarbeitungstabellen notwendig sein und durchgeführt.

Anschließend werden die Netzwerkrichtlinien so umgesetzt, dass diese vom Richtliniendurchsetzungspunkt interpretiert werden können. Beispielsweise werden bei der Verwendung von "iptables" oder "netfilter" hierzu entsprechende iptables-Regeln definiert und anschließend durch einen Orchestierungsvorgang in der jeweiligen Verarbeitungstabelle eingefügt, siehe S14. Damit ist das Einbringen einer neuen Netzwerkrichtlinie beendet, siehe S15.

Erfolgt zur Laufzeit der Containerinstanzen eine Änderung der Priorisierung, veranlasst das hierarchische Richtlinientreibermodul 25 mit Hilfe des lokal auf der Laufzeitumgebung betriebenen Richtlinienumsetzungsmoduls 22, dass die Verarbeitungstabellen gemäß Schritt S16, S17, S13 und S14 umorganisiert werden

Weist die Verarbeitungskette 50 eine leere Verarbeitungstabelle auf, wird diese innerhalb der Verarbeitungskette des jeweiligen Richtliniendurchsetzungseinheit 13 gelöscht. Die leere Verarbeitungstabelle kann durch einen Löschvorgang der Netzwerkrichtlinie oder die Entfernung entsprechender Zuordnungskriterien in der Priorisierungsrichtlinie entstehen.

Die Richtliniendurchsetzungseinheit 13 kann z.B. innerhalb eines Netzwerk-Namespaces des (orchestrierten) Gastrechners 10 oder des Netzwerk-Namespaces der jeweiligen Containerinstanzen mit Hilfe eine Linux-Firewall-Lösung wie iptables/netfilter/Berkeley Packet Filter implementiert werden oder durch Sidecar-Container auf Applikationsebene repräsentiert werden.

Durch die Abbildung einer Benutzerhierarchie auf die Verarbeitungskette der Netzwerkrichtlinien können in der gleichen Durchsetzungseinheit 13 unterschiedliche Regelwerke definiert werden. Die mit einem Anwendungsbündel, beispielsweise in Form eines Helm-Charts, übergebene Netzwerkrichtlinie, die eine Netzwerkbeschränkungsdefinition darstellt, kann innerhalb des gleichen Systems verfeinert werden. Beispielsweise kann hiermit auf einem (orchestrierten) Gastrechner die Kommunikation zwischen bestimmten Namespaces pauschal verboten werden, obwohl innerhalb der Anwendungsspezifischen Netzwerkrichtlinie die Zuordnung pauschal erlaubt wurde. Bestehende, innerhalb des Anwendungsbündels hinterlegte Netzwerkrichtlinien müssen nicht angepasst werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Ausführen einer Container-implementierte Anwendung mit Netzwerkbeschränkungen umfassend die Schritte:
- Empfangen (S1) von mindestens zwei Netzwerkrichtlinien (30, 31, 32, 33), die jeweils mindestens eine Regel in Bezug auf Netzwerkbeschränkungen zur Kommunikation der Anwendung enthalten, und die jeweils einer Hierarchieebene (41, 42, 43) innerhalb einer Netzwerkrichtlinien-Hierarchie zugeordnet sind,
- Konfigurieren (S2) der Netzwerkbeschränkungen für die Anwendung durch Abarbeiten der einzelnen Netzwerkrichtlinien (30, 31, 32, 33) in der Reihenfolge absteigender Hierarchieebenen (41, 42, 43) von einer ranghöheren (41, 42) zu einer rangniedrigeren Hierarchieebene (42, 43), wobei die Netzwerkbeschränkungen aus der ranghöheren Netzwerkrichtlinie (31, 32) lediglich durch die rangniedrigere Netzwerkrichtlinie (32, 33) eingeschränkt werden können, und
- Ausführen (S3) der Anwendung entsprechend den konfigurierten Netzwerkbeschränkungen auf einer Container-Laufzeitumgebung (12).

2. Verfahren nach Anspruch 1, wobei die Netzwerkrichtlinien-Hierarchie durch eine Priorisierungsrichtlinie (24) vorgegeben wird, die jeder Netzwerkrichtlinie (30, 31, 32, 33) abhängig von einem Auswahlkriterium eine Hierarchieebene (41, 42, 43) zuordnet.

3. Verfahren nach Anspruch 2, wobei das Auswahlkriterium die Anwendung selbst, eine Ausführungseinheit, auf der die Anwendung ausgeführt wird, oder einen Ausführungsort, an dem die Anwendung ausgeführt wird, betrifft.

4. Verfahren nach Anspruch 2, wobei das Auswahlkriterium einen Ersteller der Netzwerkrichtlinie kennzeichnet.

5. Verfahren nach einem der vorhergehenden Ansprüche, wobei ein Widerspruch von Netzwerkbeschränkungen, die durch verschiedene Netzwerkrichtlinien (31, 32, 33) innerhalb einer Hierarchieebene auftritt, innerhalb dieser Hierarchieebene (41, 42, 43) abgestimmt wird.

6. Verfahren nach einem der Ansprüche 2-5, wobei die Priorisierungsrichtlinie (24) auf einer Verwaltungseinheit (21) (21) für alle von dieser Verwaltungseinheit (21) verwalteten Gastrechner, auf denen die Anwendung ausgeführt wird, erstellt wird.

7. Verfahren nach Anspruch 6, wobei die Netzwerkrichtlinie von der Verwaltungseinheit (21) abgelehnt wird, wenn sie nicht eindeutig einer Hierarchieebene (41, 42, 43) zugeordnet ist.

8. Verfahren nach einem der vorhergehenden Ansprüche, wobei für jede Hierarchieebene (41, 42, 43) jeweils genau eine Verarbeitungstabelle aus den Netzwerkrichtlinien dieser Hierarchieebene erstellt wird und die Verarbeitungstabellen (51, 52, 53) entsprechend der absteigenden Rangfolge der Hierarcheebenen (41, 42, 43) hintereinander ausgeführt werden.

9. Verfahren nach Anspruch 8, wobei ein Zugriff auf die Verarbeitungstabelle (51, 52, 53) für einen Zugriffsberechtigten durch die Verwaltungseinheit (21) verwaltet und überprüft wird.

10. Verfahren nach Anspruch 8, wobei die Zugriffsberechtigung auf die Verarbeitungstabelle (51, 52, 53) einer bestimmten Hierarchieebene (41, 42, 43) abhängig von einer Zugangsberechtigung eines Benutzers zur Verwaltungseinheit (21) erteilt wird.

11. Verfahren nach einem der vorangehenden Ansprüche, wobei beim Empfang jeder der Netzwerkrichtlinien (30, 31, 32, 33) diejenigen Containerinstanzen der Anwendungen ermittelt werden, auf die die Netzwerkrichtlinien (30, 31, 32, 33) anzuwenden sind.

12. Verfahren nach einem der Ansprüche 8-11, wobei bei einer Änderung der Priorisierungsrichtlinie (24) während der Durchführung der Anwendung auf der Container-Laufzeitumgebung (12), die Abfolge der jeweiligen Verarbeitungstabellen (51, 52, 53) in die entsprechende Reihenfolge gebracht und entsprechend konfiguriert wird.

13. Verfahren nach einem der vorhergehenden Ansprüche, wobei die konfigurierten Netzwerkbeschränkungen durch eine Richtliniendurchsetzungseinheit (13) durchgesetzt werden, die auf der Containerlaufzeitumgebung (12) des Gastrechners (10) oder auf Anwendungsebene innerhalb der Containerinstanz (11) angeordnet ist.

14. System (20) zum Ausführen einer Container-implementierte Anwendung mit Netzwerkbeschränkungen umfassend:
- eine Verwaltungseinheit (21), die derart ausgebildet ist, mindestens zwei Netzwerkrichtlinien (30, 31, 32, 33) zu empfangen, die jeweils mindestens eine Regel in Bezug auf Netzwerkbeschränkungen zur Kommunikation der Anwendung enthalten, und die jeweils einer Hierarchieebene (41, 42, 43) einer Netzwerkrichtlinien-Hierarchie zugeordnet sind,
- ein Richtlinien-Umsetzungsmodul (22), das derart ausgebildet ist, die Netzwerkbeschränkungen für die Anwendung durch Abarbeiten der einzelnen Netzwerkrichtlinien (30, 31, 32, 33) in der Reihenfolge absteigender Hierarchieebenen (41, 42, 43) zu konfigurieren, wobei Netzwerkbeschränkungen einer ranghöheren Netzwerkrichtlinie (31, 32) lediglich durch die rangniedrigere Netzwerkrichtlinie (32, 33) eingeschränkt werden können, und
- eine Container-Laufzeitumgebung (23), die derart ausgebildet ist, die Anwendung entsprechend den konfigurierten Netzwerkbeschränkungen ausführen.

15. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens nach einem der Ansprüche 1 bis 13 durchzuführen.
